# EUROPEAN PATENT APPLICATION

(11) **EP 1 136 171 A2**
(43) Date of publication of application: **26.09.2001**
(21) Application number: 01302384.1
(22) Date of filing: 14.03.2001
(51) Int. Cl.: B23K 11/36, B23K 11/24

(54) **Resistance welding power supply apparatus**

(30) Priority: 23.03.2000 JP 2000081474
(71) Applicant: Miyachi Technos Corporation, Noda-shi, Chiba-ken (JP)
(72) Inventor: Watanebe, Mikio, Noda-shi, Chiba-ken (JP)
(74) Representative: Makovski, Priscilla Mary

(57) **Abstract**

This power supply apparatus comprises a charging circuit (30) for charging a capacitor (12). The charging circuit (30) includes a transformer (32), a rectifying circuit (34), a switching element (36), an inductance coil (38) and a freewheeling diode (40). The rectifying circuit (34) full-wave rectifies an AC power supply voltage E₁ acquired on the secondary side of the transformer (32) to provide a DC voltage as its output. When the switching element (36) is turned on or becomes conductive, a DC current I_{c} is allowed to flow through a circuit (43) extending from a positive output terminal (34a) of the rectifying circuit (34) through the switching circuit (36) and the inductance coil (38) to a negative output terminal (34b) of the rectifying circuit (34). Once the switching element (36) is switched from its ON state to OFF state, a current I_{d} based on the inductance coil (38) flows in the forward direction of the diode (40) through a closed circuit (46) consisting of the inductance coil (38), capacitor (12) and the diode (40) such that the capacitor (12) is charged with the freewheeling current I_{d}.

## Description

### BACKGROUND OF THE INVENTION

### 1. Field of the Invention

The present invention relates generally to a power supply apparatus for resistance welding, and more particularly to a power supply apparatus arranged to temporarily accumulate electric power for welding energy in its capacitor.

### 2. Description of the Related Arts

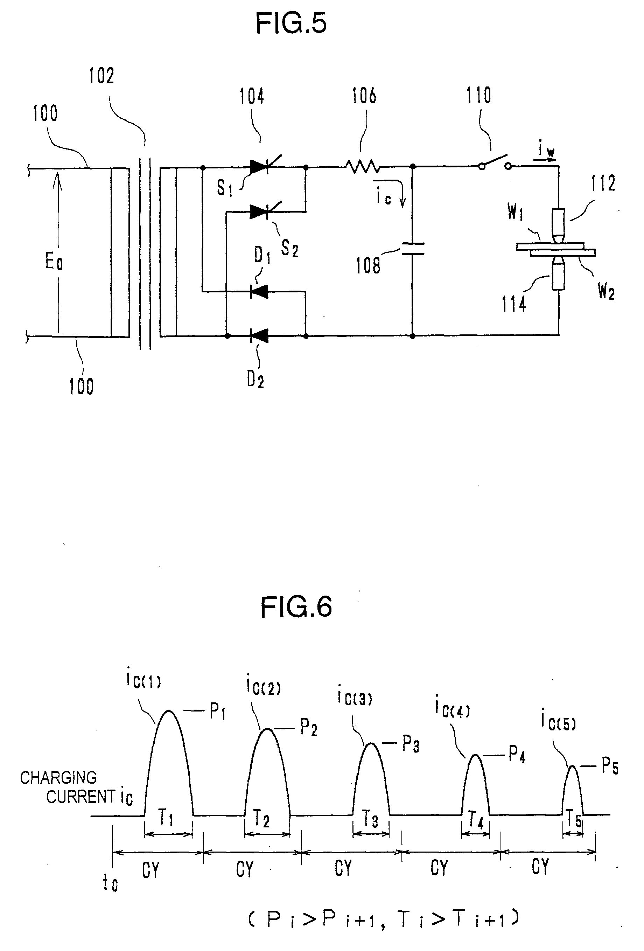

Referring first to Fig. 5 there is depicted a circuit configuration of such a conventional resistance welding power supply apparatus. In this power supply apparatus, a single-phase AC power supply voltage E₀ of a commercial frequency is applied from an AC power supply line 100 through a transformer 102 to a rectifying circuit 104, with a capacitor 108 being charged via a resistor 106 with a DC voltage output from the rectifying circuit 104, the charged energy of the capacitor 108 being discharged into a circuit associated with welding electrodes 112 and 114 by closing a switch 110 such that a welding current i_{w} is fed to workpieces (W₁ and W₂).

The rectifying circuit 104 is constituted as a single-phase half-controlled bridge rectifier consisting of a couple of thyristors S₁, S₂ and a couple of diodes D₁, D₂ which are bridge connected to each other. The rectifying circuit 104 serves to full-wave rectify the AC power supply voltage from the transformer 102 into a DC voltage. Herein, the thyristors S₁ and S₂ are alternately firing controlled for each half cycle CY of the commercial frequency by a firing circuit not shown. This allows a DC charging current i_{c} which has been phase controlled for each half cycle CY to be fed into the capacitor 108.

The transformer 102 serves not merely as a transformer for stepping down the AC power supply voltage E₀ from the AC power supply line 100 but also to electrically (direct-current-wise) isolate the apparatus from the AC power supply line 100 in view of safety upon direct use for the resistance welding of the accumulated energy of the capacitor 108.

To accumulate the resistance welding energy (electric power) within the capacitor 108 in the conventional resistance welding power supply apparatus as described above, the capacitor 108 is fed with the charging current i_{c} which has been phase controlled for each half cycle CY of the commercial frequency by firing of the thyristors S₁ and S₂ of the rectifying circuit 104.

As seen in Fig. 6, however, with the lapse of time from the start t₀ of charge, the current-supplying times T₁, T₂, T₃, etc., of the charging currents i_{c(1)}, i_{c(2)}, i_{c(3)}, etc., per half cycle become gradually shorter with gradually reduced peak values P₁, P₂, P₃, etc. More specifically, with the charging cycle iterated, the charging voltage of the capacitor 108 will gradually build up which acts as a counter-electromotive force against the output voltage of the rectifying circuit 104, with the result that each half cycle CY current-supplying time T during which the output voltage of the rectifying circuit 104 exceeds the charging voltage of the capacitor 108 will gradually narrow toward each cycle center with gradually lowered current peak values P. That is, the effective values of the charging current i_{c} will become gradually smaller.

In this manner, the conventional resistance welding power supply apparatus tends to have a low charging efficiency since the charging current i_{c} fed to the capacitor 108 is a pulsating current and becomes gradually smaller with the lapse of time. Thus, for the purpose of increasing the charging rate, the capacity of the transformer 102 has been increased with the increased effective value of a pre-rectification AC voltage input to the rectifying circuit 104. Nevertheless, due to the poor charging efficiency, the thus large-sized transformer reduces its duty factor and adds to wastefulness in resources, power consumption, apparatus space, costs, etc.

### SUMMARY OF THE INVENTION

The present invention was conceived in view of the above problem involved in the prior art. It is therefore an object of the present invention to provide a resistance welding power supply apparatus ensuring an effective charging of the capacitor for accumulating resistance welding electric energy in the form of electric charges.

Another object of the present invention is to provide a resistance welding power supply apparatus achieving an improved duty factor and a size reduction of the transformer for receiving AC power supply voltage from the AC power supply line, by improving the charging efficiency of the capacitor for accumulating resistance welding electric energy in the form of electric charges.

In order to attain the above objects, according to an aspect of the present invention there is provided a resistance welding power supply apparatus allowing a welding current to flow through a pair of welding electrodes that come into pressure contact with workpieces to be welded together to effect a resistance welding of the workpieces, the resistance welding power supply apparatus comprising a capacitor having first and second electrodes electrically connected to the pair of welding electrodes, respectively, the capacitor storing resistance welding electric energy in the form of electric charges between the first and second electrodes; first switching means electrically connected between the capacitor and one of the pair of welding electrodes; first control means which provide a switching control of the first switching means, for resistance welding current supply; a rectifying circuit which rectifies an AC power supply voltage of a commercial frequency into a DC voltage for output; an inductance coil having one end electrically connected to one output terminal of the rectifying circuit and having the other end electrically connected both to the other output terminal of the rectifying circuit and to the first electrode of the capacitor; second switching means electrically connected between one of the two output terminals of the rectifying circuit and the inductance coil; second control means which provide a switching control of the second switching means, for charging the capacitor; and a rectifying element having one terminal electrically connected to the one end of the inductance coil and having the other terminal electrically connected to the second electrode of the capacitor, the electrical connections being made in such a direction as to allow a freewheeling current to flow from the inductance coil.

In the resistance welding power supply apparatus of the present invention, when the second switching means are turned on as a result of switching control of the second control means, a direct current flows from the output terminal of the rectifying circuit via the turned-on second switching means into the inductance coil, so that electromagnetic energy is stored in the inductance coil by this current. Then when the second switching means change from its ON state to OFF state, an inductance coil current flows in the forward direction of the rectifying element through a closed circuit consisting of the inductance coil, capacitor and rectifying circuit, so that the capacitor is charged with the freewheeling current. Once the capacitor charging voltage reaches a set value, the switching control for the second switching means maybe brought to a halt. On the contrary, when the first switching means are turned on as a result of switching control of the first control mean, the electric energy stored as the electric charges in the capacitor are discharged via the first switching means toward the welding electrodes, whereupon the discharged current flows as a welding current through the workpieces sandwiched between the pair of the welding electrodes to thereby effect a resistance welding of the workpieces.

In the present invention, preferably the second control means include power supply voltage detection means which detect the AC power supply voltage to generate a power supply voltage detection signal indicative of a phase of the AC power supply voltage; current detectionmeans which detect a current flowing through the second switching element to generate a current detection signal indicative of a waveform of the current; and means which provide a switching control of the second switching means at a predetermined frequency higher than a commercial frequency so as to allow the phase of the current to substantially coincide with the phase of the AC power supply voltage on the basis of the power supply voltage detection signal and the current detection signal.

Such a configuration ensures that the charging current flows substantially in phase with the power supply voltage whereby the charging efficiency is improved with a higher power factor of the charging circuit. The charging current is not a pulsating current but a substantially continuous flow, so that the current peak value can be set to a lower value. This enables the transformer for receiving the AC power supply voltage from the AC power supply lines to have a reduced size and an improved duty factor.

In the present invention, more preferably, the second control means include power supply voltage detection means which detect the AC power supply voltage to generate a power supply voltage detection signal indicative of a full-wave rectified waveform of the AC power supply voltage; current detection means which detect a current flowing through the second switching element to generate a current detection signal indicative of a waveform of the current; and means which provide a switching control of the second switching means at a predetermined frequency higher than a commercial frequency so as to allow the phase and waveform of the current to substantially coincide with the phase and waveform of the full-wave rectified waveform of the AC power supply voltage on the basis of the power supply voltage detection signal and the current detection signal.

This configuration ensures that the charging current has the same waveform in addition to the same phase as the power supply voltage, whereby a further improvement can be achieved in the power factor and charging efficiency. It is preferred in this configuration to correct the voltage fluctuations across the AC power supply lines since the waveform itself of the AC power supply voltage is used as the reference value for the charging feedback control.

According to a preferred mode of the present invention, the power supply voltage detection means include a transformer which transforms the AC power supply voltage into a signal level; a rectifying circuit which full-wave rectifies an AC power supply voltage acquired on the secondary side of the transformer; a correction circuit which subjects an output signal from the rectifying circuit to polarity inversion, integration and level conversion; and a multiplication circuit which multiplies an output signal from the rectifying circuit and an output signal from the correction circuit together to provide the power supply voltage detection signal as its output.

### BRIEF DESCRIPTION OF THE DRAWINGS

The above and other objects, aspects, features and advantages of the present invention will become more apparent from the following detailed description when taken in conjunction with the accompanying drawings, in which:
Fig. 1 is a circuit diagram showing a circuit configuration of a resistance welding power supply apparatus in accordance with an embodiment of the present invention;
Fig. 2 is a circuit diagram showing an example of the configuration of a power supply voltage detection unit included in the resistance welding power supply apparatus of the embodiment;
Figs. 3A to 3E are waveform diagrams showing voltage and signal waveforms acquired at parts of the resistance welding power supply apparatus of the embodiment;
Figs . 4A and 4B are waveform diagrams showing a full-wave rectified waveform of an AC power supply voltage and a charging current waveform at a charging unit, respectively, in the embodiment;
Fig. 5 is a circuit diagram showing a circuit configuration of a conventional resistance welding power supply apparatus; and
Fig. 6 is a waveform diagram showing a charging current waveform acquired in the conventional resistance welding power supply apparatus.

### DESCRIPTION OF THE PREFERRED EMBODIMENT

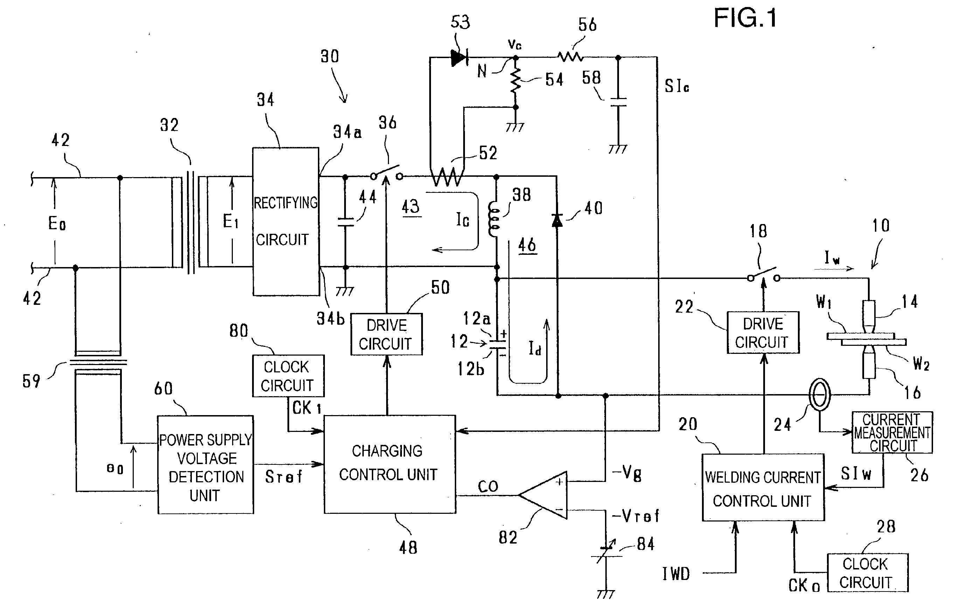

A presently preferred embodiment of the present invention will now be described with reference to Figs. 1 to 4.

Fig. 1 depicts a circuit configuration of a resistance welding power supply apparatus in accordance with the embodiment of the present invention. The power supply apparatus comprises a capacitor 12 for feeding resistance welding energy (electric power) to a welding unit 10.

The welding unit 10 includes a pair of welding electrodes 14 and 16. The welding electrodes 14 and 16 are physically connected to a pressure unit not shown such that upon the resistance welding they come into pressure contact with workpieces W₁ and W₂ from above and below, respectively, by a pressure force from the pressure unit.

The capacitor 12 consists of a single low-voltage, large-capacitance capacitor or a plurality of such capacitors which are connected in parallel. The capacitor 12 has a positive electrode 12a electrically connected via a welding current switching element 18 to the welding electrode 14 on one hand and has a negative electrode 12b electrically connected to the welding electrode 16 on the other.

The switching element 18 is formed from a transistor, e.g., an FET (field effect transistor) and is switching controlled via a drive circuit 22 by a welding current control unit 20 during the supply of welding current.

The welding current control unit 20 of this embodiment is capable of controlling a welding current I_{w} to have any set value or waveform by PWM (pulse width modulation) constant-current control. To feed back the welding current I_{w} in this constant-current control, a current sensor 24 is disposed in the form of a toroidal coil for example on a circuit (conductor) between the capacitor 12 and welding currents 14, 16 such that on the basis of an output signal (current detection signal) from the current sensor 24, a current measurement circuit 26 finds a measured value, e.g., effective value of the welding current I_{w} and feeds a thus obtained current measured value SI_{w} to the welding current control unit 20. The welding current control unit 20 further accepts a clock signal CK₀ of a predetermined frequency (e.g., 10 kHz) for PWM from a clock circuit 28 and accepts a set value or waveform of the welding current I_{w} from an input unit not shown.

In this power supply apparatus, a charging circuit 30 for charging the capacitor 12 includes a transformer 32, a rectifying circuit 34, a switching circuit 36, an inductance coil 38 and a freewheeling diode 40.

The transformer 32 has a primary coil connected to AC power supply lines 42 across which is applied a single-phase AC power supply voltage E₀ of a commercial frequency and has a secondary coil connected to input terminals of the rectifying circuit 34. The rectifying circuit 34 is formed from a single-phase full-wave rectifier consisting of, e.g., four diodes not shown which are bridge connected to each other. The rectifying circuit 34 serves to full-wave rectify an AC power supply voltage E₁ acquired on the secondary side of the transformer 32 to thereby provide a DC voltage as its output.

The rectifying circuit 34 has a pair of output terminals, i.e., a positive output terminal 34a connected via the switching element 36 to one end of the inductance coil 38, and a negative output terminal 34b which on one hand is connected to the ground potential (or grounded) and which on the other is connected to the other end of the inductance coil 38 and to the positive electrode 12a of the capacitor 12. When the switching element 36 is turned on or conductive, a DC current I_{c} flows through a circuit 43 extending from the positive output terminal 34a of the rectifying circuit 34 through the switching element 36 and then the inductance coil 38 to the negative output terminal 34b of the rectifying circuit 34. A smoothing capacitor 44 is interposed between the output terminals 34a and 34b of the rectifying circuit 34.

The freewheeling diode 40 has an anode terminal connected to the negative electrode 12b of the capacitor 12 and a cathode terminal connected to one end of the inductance coil 38. When the switching element 36 goes OFF from its ON-state, a current I_{d} from the inductance coil 38 flows in the forward direction of the diode 40 through a closed circuit 46 formed from the inductance coil 38, the capacitor 12 and the diode 40 such that the capacitor 12 is charged with the freewheeling current I_{d}.

In other words, while the switching element 36 is ON, electromagnetic energy is stored in the inductance coil 38 by the current I_{c} flowing though the output circuit 43 of the rectifying circuit 34, whereas once the switching element 36 goes OFF from ON, the electromagnetic energy in the inductance coil 38 is converted into electrostatic energy (electric charges) within the capacitors 12 by the action of current I_{d} flowing in the freewheeling circuit 46.

The switching element 36 can be a transistor, e.g., an FET and is switching controlled via a drive circuit 50 by a charging control unit 48 during the supply of charging current.

Using as a reference the phase and waveform of the AC power supply voltage E₀ across the AC power supply lines 42, the charging control unit 48 provides a PWM-based constant-current control directly of the current I_{c} flowing through the rectifier output circuit 43 and indirectly of the current I_{d} flowing through the freewheeling circuit 46.

For the purpose of feeding back the current I_{c} in this constant-current control, the rectifier output circuit 43 is fitted with a current sensor 52 in the form of a CT coil for example. When the current I_{c} flows therethrough, a current having a waveform similar to that of the current I_{c} flows through a closed circuit formed from the current sensor 52 (CT coil), a diode 53 and a resistor 54 (the diode 53 is excluded in case of using, e.g., a Hall CT as the current sensor) so as to allow a voltage signal, i.e., current detection signal v_{c} having a waveform similar to that of the current I_{c} to be acquired at a node N. The current detection signal v_{c} is fed as a feedback signal SI_{c} to the charging control unit 48 by way of a low-pass filter formed from a resistor 56 and a capacitor 58. The charging control unit 48 accepts from a power supply voltage detection unit 60 a reference signal S_{ref} in the form of a power supply voltage detection signal indicative of a full-wave rectified waveform of the AC power supply voltage E₀.

The power supply voltage detection unit 60 accepts an AC voltage e₀ of a signal level transformed by a transformer 59 from the AC power supply voltage E₀ across the AC power supply lines 42. On the basis of the AC voltage e₀ similar to the AC power supply voltage E₀, the power supply voltage detection unit 60 generates a power supply voltage detection signal S_{ref} indicative of the full-wave rectified waveform of the AC power supply voltage E₀. In a typical factory equipped with such resistance welding apparatuses, however, substantial voltage fluctuations are apt to occur across the AC power supply lines due to a multiplicity of electric equipment or electric machines being connected to power distribution lines or the AC power supply lines. This embodiment allows the power supply voltage detection unit 60 to have a function for correcting such voltage fluctuations.

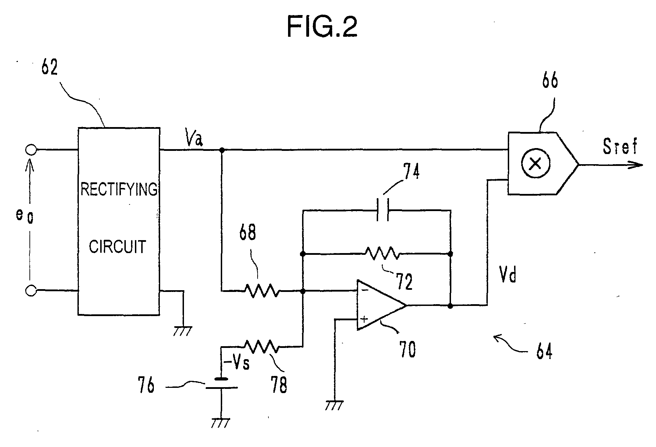

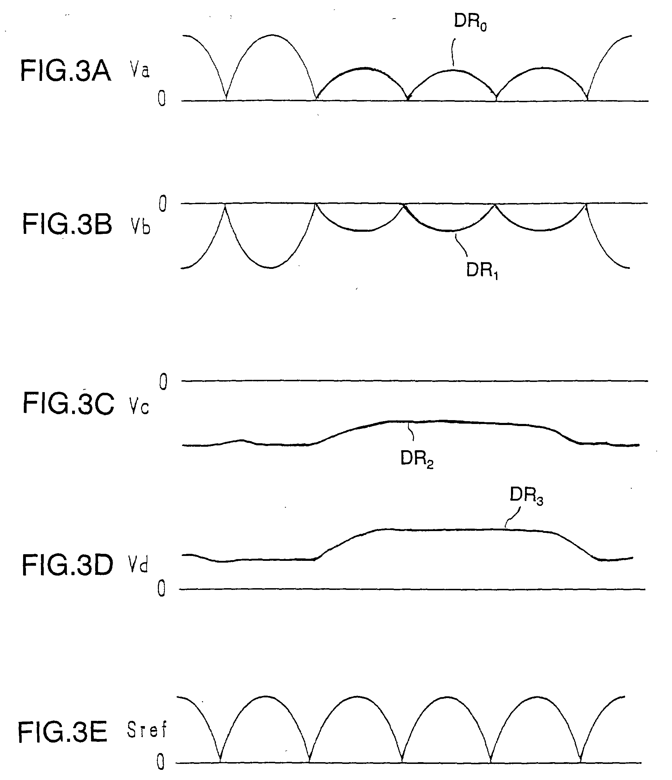

Fig. 2 depicts an example of the configuration of the power supply voltage detection unit 60. Figs. 3A to 3E illustrate voltage or signal waveforms acquired at parts of the power supply voltage detection unit 60.

This power supply voltage detection unit 60 comprises a rectifying circuit 62 which provides an intrinsic power supply voltage detection circuit for generating a power supply voltage detection signal indicative of a full-wave rectified waveform of the AC power supply voltage E₀, with the remaining parts making up a correction circuit 64 for correcting the power supply voltage fluctuations.

The rectifying circuit 62 is formed from a single-phase full-wave rectifier consisting of, e.g., four diodes not shown which are bridge connected to each other. The rectifying circuit 62 serves to full-wave rectify an AC power supply voltage e₀ from the transformer 59 to thereby output a DC voltage Vₐ of a full-wave rectified waveform as depicted in Fig. 3A. The output voltage Vₐ from the rectifying circuit 62 is a power supply voltage detection signal accurately indicative of the full-wave rectified waveform of the AC power supply voltage E₀ across the AC power supply lines 42. Due to the resultant faithful reflection of the voltage fluctuations across the AC power supply lines 42, however, employment of the detection signal as the reference signal might possibly induce any disturbance in the control system (charging control unit 48) .

A negative output terminal of the rectifying circuit 62 is connected to the ground potential (or grounded), whilst the power supply voltage detection signal Vₐ acquired at a positive output terminal of the rectifying circuit 62 is fed both to one input terminal of an analog multiplier 66 and via a resistor 68 to an inversion input terminal (-) of an operational amplifier 70.

A non-inversion input terminal (+) of the operational amplifier 70 is connected to the ground potential, with a resistor 72 being interposed between the inversion input terminal (-) and an output terminal of the operational amplifier 70. Such a configuration allows the operational amplifier 70 to act as an inverting amplifier.

A capacitor 74 is also interposed between the inversion input terminal (-) and the output terminal of the operational amplifier 70. This configuration allows the operational amplifier 70 to serve also as an integrator.

A negative DC voltage (-Vₛ) from a DC power supply 76 is applied via a resistor 78 to the inversion input terminal (-) of the operational amplifier 70. By virtue of this configuration, the operational amplifier 70 functions also as an analog adder.

The full-wave rectified waveform signal Vₐ from the rectifying circuit 62 is subjected simultaneously to three signal processings, i.e., inverting amplification, integration and addition by the operational amplifier 70. First, the inverting amplification allows the positive full-wave rectified waveform signal Vₐ to be polarity inverted into a negative full-wave rectified waveform signal V_{b} as depicted in Fig. 3B. The integration smoothes the negative full-wave rectified waveform signal V_{b} into a negative voltage V_{c} having a gentle amplitude as depicted in Fig. 3C. Then the addition raises the voltage level of the negative voltage V_{c} by a DC voltage Vs for the polarity inversion into a positive DC voltage V_{d} as depicted in Fig. 3D. The positive DC voltage V_{d} emerges at the output terminal of the operational amplifier 70.

The voltage V_{d} output from the operational amplifier is fed as a correction signal to the other input terminal of the multiplier 66. The multiplier 66 subjects the two input signals Vₐ and V_{d} to analog multiplication to feed a multiplied output signal as the reference signal S_{ref} to the charging control unit 48 (Fig. 1).

When a voltage fluctuation occurs across the AC power supply lines 42, the output voltage Vₐ from the rectifying circuit 62 also undergoes a similar voltage fluctuation, e.g., DR₀ as shown in Fig. 3A. By way of the above three signal processings, i.e., inverting amplification, integration and addition by the operational amplifier 70, the voltage fluctuation will change from DR₀ through DR₁ and DR₂ into DR₃ as shown in Figs. 3B, 3C and 3D, respectively. The final voltage fluctuation DR₃ is proportional in the degree of fluctuation to the original voltage fluctuation DR₀ but opposite in the direction of fluctuation thereto. Hence, the output voltage Vₐ from the rectifying circuit 62 containing the original voltage fluctuation DR₀ is multiplied by the output signal V_{d} from the operational amplifier 70 containing the above signal-processed voltage fluctuation DR₃, with the result that DR₀ is cancelled (corrected) by DR₃ so that the multiplied output signal S_{ref} can stably keep the voltage fluctuation-free full-wave rectified waveform.

In this manner, irrespective of occurrence of any voltage fluctuations across the AC power supply lines 42, the power supply voltage detection unit 60 of this embodiment is able to effectively cancel the power supply voltage fluctuations with the aid of the correction circuit 64 and generate the reference signal S_{ref} accurately indicative of the original full-wave rectified waveform of the AC power supply voltage E₀.

Referring again to Fig. 1, the charging control unit 48 accepts from a clock circuit 80 a clock signal CK₁ of a predetermined frequency (e.g., 10 kHz) defining a basic cycle for PWM control. A comparator 82 has two input terminals, one of which accepts a negative charging voltage -Vg that is a voltage at the negative electrode 12b of the capacitor 12, the other of which accepts a variably adjustable, negative capacitor charging set voltage -V_{ref} from a DC power supply 84. An output signal CO from the comparator 82 is fed to the charging control unit 48. The comparator 82 allows the output signal CO to go low when the charging voltage V_{g} (absolute value) of the capacitor 12 is higher than the charging set voltage V_{ref} (absolute value) but to go high when the former is lower than the latter (V_{g} < V_{ref}).

The charging control unit 48 accepts the output signal CO as a charging voltage monitor signal from the comparator 82 and, if the output signal CO goes high (when V_{g} < V_{ref}), renders the charging unit 30 conductive, i.e., provides a switching control of the switching element 36 to charge the capacitor 12. More specifically, for each cycle of the clock signal CK₁, the charging control unit 48 compares the current detection signal SI_{c} from the charging current detection unit (52 to 58) with the reference signal S_{ref} from the power supply voltage detection unit 60 to find an error so that in the next cycle, the switching element 36 is kept ON during such an ON time (pulse width) as to allow the preceding cycle error to come closer to zero.

As described earlier, when the switching element 36 is turned on, the current I_{c} can flow on the output side of the rectifying circuit 34 to store the electromagnetic energy in the inductance coil 38. Herein, capacitor 12 is not included in the circuit 43 through which the current I_{c} flows, so that the charging voltage of the capacitor 12 does not act as a counter electromotive force on the output terminals 34a and 34b of the rectifying circuit 34. Owing to such a freedom from the action of the charging voltage of the capacitor 12, it is possible to provide a stable constant-current control of the current I_{c} and thus to provide a stable constant-current control of the current I_{d} fed to the capacitor 12 by way of the electromagnetic energy stored within the inductance coil 38.

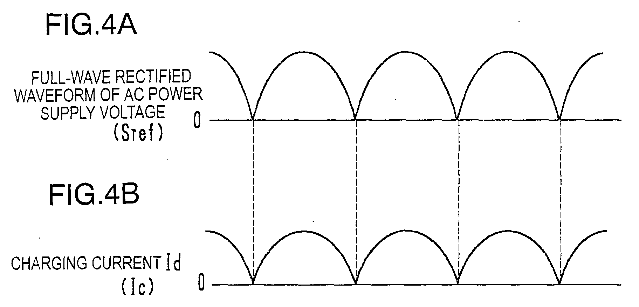

Figs. 4A and 4B illustrate a full-wave rectified waveform (reference signal S_{ref}) of the AC power supply voltage E₀ and a waveform of the charging current I_{d} (I_{c}) through the charging unit 30, respectively, in this embodiment. This embodiment is capable of realizing an extremely high power factor since the charging current I_{d} fed to the capacitor 12 is not merely in phase with but also conforms in waveform to the full-wave rectified waveform (which corresponds to the output voltage from the rectifying circuit 34) of the AC power supply voltage E₀.

In each half cycle of the commercial frequency, the charging current I_{d} is not a pulsating current but flows in a continuous manner under the constant-current control, so that the current peak value can be set to a much lower value than the prior art. For this reason, the charging transformer 32 works at a high efficiency, allowing even a small-sized transformer to fully deal practically with any charging voltages or any charging rate.

Although in the above embodiment the phase and waveform of the charging current I_{d} (I_{c}) of the charging unit 30 conform to the phase and waveform of the full-wave rectified waveform of the AC power supply voltage E₀, control may be provided such that only the phases conform to each other with quite different waveforms (e.g., rectangular or trapezoidal waveform). In such an event, the power supply voltage detection circuit 60 may include a circuit for detecting the phase of the AC power supply voltage E₀ and further use a waveform generation circuit for individually forming waveforms of the reference signal S_{ref} for the charging control unit 48.

Although in the above embodiment the switching element 18 for supply of welding current has suffered a switching control at a high frequency, another switching control may be provided so as to keep the switching element 18 conductive continuously as a sort of variable resistor.

The above embodiment has employed the single-phase AC power supply voltage, but instead a three-phase AC power supply voltage may be used. In such a case, the transformer 32 and the rectifying circuit 34 should be of three-phase type.

The welding unit 10 could variously be modified. For example, series welding is also feasible without being limited to the spot welding as in the above embodiment.

According to the resistance welding power supply apparatus of the present invention, as set forth hereinabove, it is possible to ensure an effective charging of the capacitor for storing the resistance welding electric energy in the form of electric charges and further to achieve an improved duty factor and a size reduction of the transformer for accepting the AC power supply voltage from the AC power supply line.

## Claims

1. A resistance welding power supply apparatus allowing a welding current to flow through a pair of welding electrodes that come into pressure contact with workpieces to be welded together to effect a resistance welding of said workpieces, said resistance welding power supply apparatus comprising:
a capacitor having first and second electrodes electrically connected to said pair of welding electrodes, respectively, said capacitor storing electric energy for resistance welding in the form of electric charges between said first and second electrodes;
first switching means electrically connected between said capacitor and said welding electrode;
first control means which provide a switching control of said first switching means, for supply of resistance welding current;
a rectifying circuit which rectifies an AC power supply voltage of a commercial frequency into a DC voltage for output;
an inductance coil having one end electrically connected to one output terminal of said rectifying circuit and having the other end electrically connected both to the other output terminal of said rectifying circuit and to said first electrode of said capacitor;
second switching means electrically connected between output terminal of said rectifying circuit and said inductance coil;
second control means which provide a switching control of said second switching means, for charging said capacitor; and
a rectifying element having one terminal electrically connected to said one end of said inductance coil and having the other terminal electrically connected to said second electrode of said capacitor, said electrical connections being made in such a direction as to allow a freewheeling current to flow from said inductance coil.

2. A resistance welding power supply apparatus according to claim 1, further comprising:
a transformer having a primary coil electrically connected to AC power supply lines which distribute said AC power supply voltage and having a secondary coil electrically connected to input terminals of said rectifying circuit.

3. A resistance welding power supply apparatus according to claim 1 or 2, wherein
said second control means include:
power supply voltage detection means which detect said AC power supply voltage to generate a power supply voltage detection signal indicative of a phase of said AC power supply voltage;
current detection means which detect a current flowing through said second switching element to generate a current detection signal indicative of a waveform of said current; and
means which provide a switching control of said second switching means at a predetermined frequency higher than a commercial frequency so as to allow the phase of said current to substantially coincide with the phase of saidAC power supply voltage on the basis of said power supply voltage detection signal and said current detection signal.

4. A resistance welding power supply apparatus according to claim 1 or 2, wherein
said second control means include:
power supply voltage detection means which detect said AC power supply voltage to generate a power supply voltage detection signal indicative of a full-wave rectified waveform of said AC power supply voltage;
current detection means which detect a current flowing through said second switching element to generate a current detection signal indicative of a waveform of said current; and
means which provide a switching control of said second switching means at a predetermined frequency higher than a commercial frequency so as to allow the phase and waveform of said current to substantially coincide with the phase and waveform of said full-wave rectified waveform of said AC power supply voltage on the basis of said power supply voltage detection signal and said current detection signal.

5. A resistance welding power supply apparatus according to claim 3 or 4, wherein
said power supply voltage detection means include:
a transformer which transforms said AC power supply voltage into a signal level;
a rectifying circuit which full-wave rectifies an AC power supply voltage acquired on the secondary side of said transformer;
a correction circuit which conducts polarity inversion, integration and level conversion on an output signal from said rectifying circuit; and
a multiplication circuit which multiplies an output signal from said rectifying circuit and an output signal from said correction circuit together to output said power supply voltage detection signal.
